Europäisches Patentamt

European Patent Office

Office européen des brevets

(19)

(11) Publication number: **0 388 108**
**A2**

# EUROPEAN PATENT APPLICATION

(12)

(21) Application number: **90302586.4**

(22) Date of filing: **12.03.90**

(51) Int. Cl.5: **B09B 3/00, C02F 11/00**

(30) Priority: **13.03.89 GB 8905705**

(43) Date of publication of application:
**19.09.90 Bulletin 90/38**

(84) Designated Contracting States:
**DE ES FR GB IT**

(71) Applicant: **ALLIED COLLOIDS LIMITED**
**P.O. Box 38 Low Moor**
**Bradford West Yorkshire, BD12 0JZ(GB)**

(72) Inventor: **Moody, Gillian Mary**
**106 Granny Hall Lane**
**Brighouse, West Yorkshire(GB)**
Inventor: **Rushforth, Christine Anne**
**23 Wrose Grove**
**Bradford, West Yorkshire(GB)**

(74) Representative: **Jones, Helen Marjorie**
**Meredith**
**Gill Jennings & Every 53-64 Chancery Lane**
**London WC2A 1HN(GB)**

(54) **Treatment of bayer process wastes.**

(57) Red mud filter cake from the Bayer process is mixed with particulate water-swellable water-insoluble polymer such that it can be pumped as a liquid and then rigidifies when placed on a mud stack. The polymer is applied as agglomerates of fine particles or as dispersions in water-immiscible solvent. The polymer is usually an anionic synthetic polymer, for instance formed from acrylic monomers and cross-linking monomer.

EP 0 388 108 A2

## Treatment of Bayer Process Wastes

The present invention relates to a process for the treatment of waste materials from the Bayer process of recovering alumina from bauxite, in particular to the treatment of red mud to render it more easily disposable.

In the Bayer process for recovery of alumina from bauxite the bauxite is digested in an aqueous alkaline liquor to form aluminate which is separated from the insoluble residue. This residue consists mainly of particles of ferric oxide and is known as red mud.

The red mud is washed in a plurality of sequential wash stages, in which the red mud is contacted with a wash liquor and is then flocculated by the addition of a flocculating agent. The supernatant liquor is further processed to recover aluminate. After the final wash stage the red mud slurry is thickened as much as possible and then disposed of. Thickening in the context of this specification means that the solids content of the red mud is increased. The final thickener may comprise settlement of flocculated slurry only or, sometimes, includes a filtration step. Alternatively or additionally the mud may be subjected to a prolonged settlement in a lagoon.

The mud can be disposed of and/or subjected to further drying for subsequent disposal on a mud stacking area. To be suitable for mud stacking the mud should have a high solids content and, when stacked, should not flow but should be relatively rigid in order that the stacking angle should be as high as possible so that the stack takes up as little area as possible for a given volume. The requirement for high solids content conflicts with the requirement for the material remain pumpable as a fluid, so that even though it may be possible to produce a mud having the desired high solids content for stacking, this may render the mud unpumpable.

In EP-A-0195550 a wet particulate mass is mixed with water-absorbent polymer to form a crumbly mixture that can be handled as a solid. The process is primarily directed to the treatment of particles having fairly large particle sizes, eg iron ore deposits to prevent them freezing solid in containers stored in cold climates but it is stated that the process is also applicable for converting red mud deposits into a crumbled solid.

In GB-A-2200440 a wet particulate sticky mass is converted to a crumbly or flowable solid, again that is capable of being handled as a solid, by the addition to the mass of water-absorbent polymer in the form of particles having sizes less than $50\mu m$, either bonded to form aggregates or dispersed in a water-immiscible liquid. The citation is primarily directed to the treatment of coal fines filter cake to mix with coal fines and use as a fuel, but also mentions that red mud can be treated by the process.

In a new process according to the present invention a material comprising an aqueous liquid with a dispersed particulate solids is pumped as a fluid then allowed to stand and rigidify and the rigidification is improved whilst retaining the pumpability of the material by, prior to pumping the material, blending into the material particles of a water-absorbent, water-insoluble polymer.

The blend of the dispersion with polymer is a pseudo plastic material, that is it is capable of being pumped but, even after being pumped, when allowed to stand, ie whilst under very low shear, forms a relatively rigid, stackable material.

The process of the invention is suitable for treating materials wherein the dispersed particulate solids have very small particle sizes, for instance, substantially all having sizes less than 100 microns, and even for materials wherein substantially all of the particles have sizes of less than 50 microns. It is of particular value where at least 90% of the particles have sizes less than 20 microns. The particles are usually of an inorganic material, usually a mineral. Although it may be useful for other materials requiring to be pumped and then stacked especially for materials which are filter cakes, for instance other mineral tailings or slimes, including phosphate, diamond or gold slimes, the major use of the present process is in the treatment of red mud from the final thickener of a Bayer process. The red mud may thus be the solids settled from the final thickener stage by the addition of flocculant alone, or, usually, the material is the filter cake from the pressure filtration of the slurry produced in the final wash stage. The red mud or other material which is pumped may have a solids content in the range 30% to 80% by weight, usually in the range 40% or 50% to 70% by weight, for instance 55% to 65% by weight. The sizes of particles in a typical red mud sample are substantially all less than 25 microns, for instance about 95% by weight of mud is particles less than 20 microns and about 75% is less than 10 microns, and about 95% more than 3 microns.

It is surprising that the process according to the invention forms a product which rigidifies far better, so as to minimise the area taken up by a stack of the material of given volume. This is achieved whilst maintaining the pumpability of the material, it being possible to provide a material which, under shear, has a viscosity not significantly different from the material without addition of polymer. In addition, in the absence of the water absorbent polymer, the material can be irreversibly shear thinning so that after pumping it does not rigidify at all. We have now found that the addition of polymer according to the present invention overcomes this problem and provides a material which becomes rigid when pumping is stopped.

The polymer used in the process preferably comprises particles which have an effective dry size such that at least 90% by weight of the particles have a size of less than 50 microns and are added as bonded friable aggregates of which at least 90% by weight have a size of more than 50 microns or are added as a dispersion of particles in a water-immiscible liquid.

The polymer may be natural or modified natural polymer such as a starch acrylonitrile graft copolymer or other modified starch, but preferably it is a synthetic polymer. It may be formed from a monomer blend such that the polymer, in linear form, is swellable but insoluble, for instance as a result of including hydrophobic monomer in the monomer blend. Such polymers can, for instance, be made by oil-in-water emulsion polymerisation. For instance they may be made at a pH at which they are relatively non-swellable and insoluble and the pH may then be adjusted, for use, to a value at which the particles are swellable and absorbent and that is the pH of the wet particulate mass.

Generally however the polymer is made from water soluble monomer or monomer blend. Suitable monomers are generally monoethylenically unsaturated monomers but cross linking agent is preferably included in order to convert the resultant polymer to water insoluble but water swellable form. The cross linking agent can be reacted into the polymer after polymerisation but preferably is present during polymerisation. Generally it is a di- or other poly- ethylenically unsaturated monomer such as methylene bis acrylamide or any of the other ethylenically unsaturated cross linking agents that are suitable for cross linking absorbent polymer particles. Instead of or in addition to relying on a covalent cross linking agent of this type, cross linking can also be through pendant groups in known manner. For instance it can be by polyvalent metal ions.

When the polymer particles are of cross linked, water swellable but insoluble, synthetic polymer, it is sometimes possible to achieve adequate results using a non-ionic polymer but best results are obtained more reliably using a cationic or anionic polymer. The polymer is made from the appropriate monomer or monomer blend. The monomers are generally acrylic. Preferably 5 to 100%, often 10 to 100% is ionic.

Suitable anionic monomers are ethylenically unsaturated carboxylic or sulphonic monomers such as (meth) acrylic acid, allyl sulphonate or 2-acrylamido methyl propane sulphonic acid. Anionic monomers are generally present as a water soluble salt, usually a sodium salt.

Suitable non-ionic monomers are (meth) acrylamide and (meth) acrylic esters.

Suitable cationic monomers are dialkyl amino alkyl (meth) -acrylate or -acrylamide as free base, acid salt or, preferably, quaternary salt and diallyl dimethyl ammonium chloride. Cationic monomers are generally used as a blend with acrylamide. Anionic monomers may be present as homopolymer or as copolymers of anionic monomer with, preferably, acrylamide.

The preferred anionic polymers are cross linked polymers of 5 to 100 mole % acrylic acid (as free acid or salt) with 0 to 95 mole % acrylamide and optionally 0 to 50 mole % other non-ionic or anionic monomer. The acrylic acid is preferably present wholly or mainly, e.g., at least 70 or 80% by weight, as sodium acrylate. Suitable polymers are copolymers in which the amount of acrylic acid (as free acid or salt) is typically from 20 to 75% by weight, with the balance being acrylamide. It is generally preferred for at least 40% by weight of the monomers for the anionic polymer to be sodium acrylate. Typical polymers of this general type are cross linked polymers of 40 to 60% by weight sodium acrylate with 60 to 40% by weight acrylamide when used as dispersions in water immiscible liquid.

Particularly preferred swellable polymers for use in the invention are sodium polyacrylate homopolymers, although up to 20% of the sodium acrylate can be replaced by acrylamide. Also some or all of the sodium acrylate groups can be replaced by acrylic acid or by other water soluble salts, generally alkali metal salts.

Another type of swellable polymer useful in the invention is an anionic polymer formed from 2-acrylamidomethyl propane sulphonic acid, optionally with acrylamide as a comonomer. The polymer may comprise 30% to 70% of the anionic monomer, preferably 40% to 60% by weight of the monomer.

The degree of swellability and absorption is controlled, in part, by the extent of cross linking and the amount of cross linking agent is usually below 500ppm, often below 300ppm. It is usually at least 10ppm or 20ppm and preferably at least 50ppm. Best results are often achieved at around 100 or 200ppm. These amounts are the amounts by weight of monomer of methylene bis acrylamide and equivalent amounts of other cross linking agents may be used.

The degree of cross linking, and the polymer type, should be such that the gel capacity of the polymer (grams deionised water absorbed per gram polymer) is at least 25, generally at least 100 and preferably at least 200 typically up to 500 or even 700 or higher.

The capacity of the polymer to absorb the liquid which forms the continuous phase of the material to be treated may also be important. The polymer is usually capable of absorbing at least 10 times, preferably at least 20 or even at least 50 times or more its own weight of that liquid.

In one aspect of the invention the polymer is added in the form of bonded aggregates having any sizes greater than 50μm and formed from individual particles having any sizes less than 50μm, often below 30μm. For instance polymer gel fines, e.g., as obtained from the comminution of polymer gel or as fines from a reverse phase bead polymerisation process, can be aggregated by swelling with sufficient water to form a comminutable gel, comminuted to a coarse size and dried (e.g., by a fluidised bed). These internally bonded aggregates appear to behave initially as coarse particles and then to behave as fines.

Any aqueous solution that permits swelling can be used. Water is usually best. An aqueous solution of a small amount of a soluble polymer or other binder could be used. The comminution can be to >90% by weight above 50μm and usually above 100μm, but generally below 1 or 2mm and often below 500μm. Comminution can be by conventional gel comminution methods. Drying can be by conventional techniques followed if necessary by comminution in conventional manner. The resultant aggregates have a size in the range generally of 50 to 500μm. They can very satisfactorily be used in the invention. The fines within each aggregate typically have a size mainly 5 to 30μm and often below 20μm.

By swelling the fines into a comminutable gel, the resultant dried comminuted particles appear to be internally bonded. This is in contrast to the skin bonding effect that is obtained if fines are merely sprayed with water and immediately dried in a fluid bed. Skin bonded aggregates can be used in the invention but internally bonded aggregates may give better results. By this means it is possible to achieve the rapid uptake of water and good properties of the product that is obtained with the use of fine particles while avoiding the dusting problems with fine particles. Preferably at least 90% by weight of the aggregates are above 125μm.

When the particles are introduced into the mixing step in the form of a dispersion in water immiscible liquid, preferably at least 90% of the particles are below about 20μm or 30μm, and most preferably below 10μm. Fastest results are generally achieved with at least 90%, preferably 99%, by weight being below 3μm, e.g., in the range 0.03 to 2μm. Often however adequate results are obtained in a cost effective manner, albeit more slowly, if the particle are 90% between 5 and 50μm, e.g., about 5 to 30μm.

The concentration of polymer in the dispersion may be in the range 15% to 60% by weight of the dispersion. Preferably the polymer concentration is at least 20% by weight, more preferably at least 30% by weight. In general the concentration is around 50% by weight.

The water-immiscible liquid may be any organic liquid in which the polymer particles can be adequately dispersed and that will not interfere with the process and so in practice needs to be substantially water immiscible. It can be, for instance, a vegetable oil but is preferably a hydrocarbon or halogenated hydrocarbon liquid. It may be selected from any of the liquids conventionally used in reverse phase dispersions. For instance it can be kerosene or diesel oil or other mineral oil.

The dispersion can be formed at the point of use, with the polymer particles being dispersed into the water-immiscible liquid and the mixture then being applied substantially immediately to the material. Preferably however the dispersion is preformed, in which event it needs to be substantially stable against settlement.

One form of dispersion is a suspension obtained by dispersing preformed dry polymer particles into water-immiscible liquid in the presence of a dispersion stabiliser. The preformed dry polymer particles can be reverse phase microbeads but preferably they are fines separated from polymer gel, e.g., obtained during the comminution of bulk or bead gel or separated from beads obtained by reverse phase polymerisation.

The amount of stabiliser is generally from 1 to 15%, often 3 to 10%, by weight based on the dry weight of polymer. Conventional stabilisers for oil based dispersions may be used, e.g., Bentone clays but preferably the dispersion is stabilised by stirring into it an aqueous emulsion of an oil soluble or oil swellable polymeric thickener, generally a thickener that is insoluble and non-swellable in water. Suitable thickeners are described in EP-A-0161926, for instance in Example 7 and at page 11 line 22 to page 12 line 10.

Instead of using polymer fines, typically having a size of 10 to 30 or 10 to 40μm, the dispersion can be a reverse phase dispersion made by reverse phase polymerisation of aqueous monomer or monomer blend in water-immiscible liquid. See for instance U.S. 4,059,552. The reverse phase polymerisation is preferably conducted as a reverse phase suspension polymerisation. Formation of an initial dispersion of monomer particles can be facilitated by the incorporation of a small amount of water-in-oil emulsifying agent. Often amphipathic stabiliser is included, in known manner, especially when the dispersion is subsequently azeotroped. Depending upon the degree of agitation when forming the initial dispersion of aqueous monomer in the non-aqueous liquid, and depending upon the amount and type of stabiliser and emulsifier, if present, the dry particle size of the final dispersion can be controlled and typically has a maximum size of $1\mu m$ or up to 2 or $3\mu m$ or $10\mu m$ at the most. The product of the reverse phase polymerisation can be described as an emulsion. It may be dried, e.g., by azeotroping to reduce the water content, typically to below 15% by weight of the polymer. The product is then a substantially dry dispersion.

The amount of amphipathic stabiliser (if present) is generally in the range 0.2 or 0.5 to 10%, and generally below 5%, based on the weight of polymer. The amount of water-in-oil emulsifier is preferably from 0.2 to 3%, based on weight of monomer.

In normal processes in which a reverse phase dispersion in oil of water soluble or swellable polymer is mixed into water, it is conventional to conduct the mixing in the presence of an oil-in-water emulsifier so as to promote distribution of the dispersion and the dispersed polymer into the water. For instance, it is common to add the emulsifier to the polymer dispersion before blending with the water.

The amount of polymer that is applied in the invention to obtain the desired results is usually at least 0.1 g per kg starting material, more usually at least 0.2, more preferably 0.5 g polymer per kg starting material. In general it is preferred to add less than 10 g polymer per kg starting material, more preferably less than 5 g, preferably less than 2 g of polymer per kg starting material. If an excessive amount of polymer is added to the material then it can no longer be pumped but forms into a solid mass, or a crumbly solid, neither of which can be pumped. Furthermore the use of large amounts of polymer is uneconomic.

The polymer is mixed into the material in a manner which ensures good dispersion. If the polymer is added in the form of aggregates, the mixing should be such as to break the aggregates into the individual particles. Mixing may be carried out in line during the pumping process or may be carried out in a separate stage prior to the pumping stage. If the polymer is added during pumping, it is suitably added in line immediately before the pump, for instance which may be a centrifugal pump or a mono pump or other type of pump conventionally used for pumping the red mud. If the polymer is mixed in a separate stage it should be mixed in a mixer which encloses the slurry long enough for satisfactory mixing to occur, for instance in a plough share mixer which encloses the mixture during mixing and imparts sufficient shear to give adequate mixing. One suitable type of plough share mixer is a Loedige mixer. Another suitable type of mixer is exemplified by a 'Turbulator' manufactured by Ferro-Tech.

The following examples illustrate the invention.

## Example 1

A range of water-swellable polymer preparations were tested for their effect on the viscosity characteristics of a sample of red mud from a final washer filter of a commercial plant. This mud had a solids content of 58.6% by weight and had a pH of 13.1. The mud was thoroughly mixed to ensure homogeneity. A 250 ml sample of the mud was placed in a beaker and stirred using a Heidolph and Gate-stirrer for 15 seconds, at which point the appropriate amount of polymer was added. Stirring was continued for 2 minutes at 550 rpm. The viscosity of the sample was then measured at 10, 20 and 50 rpm using a Brookfield viscometer and spindle no. 6. The results are shown in Table 1 in which the following polymers are used:

A: Sodium polyacrylate cross linked with 0.025% methylene bis acrylamide (MBA) is formed by conventional bulk gel polymerisation and is dried and comminuted in conventional manner. The resultant particles are classified according to size and the fines are retained for use in the invention. They have a dry particle size below $50\mu m$, mainly in the range 10 to $30\mu m$.
The fines are dispersed into an equal weight of a hydrocarbon oil that is thickened with a dispersion stabiliser as described at page 18 lines 25 to 35 of EP 0161926A. 1% oil-in-water emulsifier is included.

B: Sodium polyacrylate cross-linked with 0.025% MBA is formed by reverse phase polymerisation in the presence of an emulsifier and then dried by azeotroping to form a dispersion of 50% by weight in oil. The particles are mainly less than 3 microns.

C: A mixture of 60% by weight acrylamide and 40% by weight sodium acrylate cross-linked with 0.07% MBA is formed by conventional aqueous bulk gel polymerisation and is dried and comminuted in conventional manner to form particles having sizes in the range 75 to $1000\mu m$.

D: A polymer formed by the same process as A but from 100% sodium acrylate, but used as the solid as in C.

E: A polymer formed in the same way A but from a 50:50 mixture of 2-acrylomidomethylpropane sulphonic acid:acrylamide with 0.075% MBA cross-linker, used as the solid as in C.

F: A polymer formed in the same manner as C but from a 60:40 mixture acrylamide and quaternised dimethyl amino ethyl acrylate (to form a cationic polymer) and used as the solid.

TABLE 1

| Polymer | Dose product /l | Brookfield viscosity at | | |
|---|---|---|---|---|
| | | 10rpm | 20rpm | 50rpm |
| A | 2 ml<br>4 ml<br>8 ml | 16,500<br>20,000<br>Solid | 9,600<br>18,250 | 10,200<br>14,050 |
| B | 4 ml<br>8 ml<br>12 ml | 9,200<br>22,500<br>+100,000 | 8,800<br>12,000<br>Solid | 8,900<br>9,800 |
| C | 2 g<br>4 g<br>8 g | 7,500<br>7,500<br>+100,000 | 6,050<br>6,000<br>Solid | 9,200<br>8,800 |
| D | 2 g<br>4 g<br>8 g | 10,000<br>31,400<br>+100,000 | 7,600<br>15,250<br>Solid | 7,680<br>11,500 |
| E | 2 g<br>4 g<br>8 g | 14,900<br>15,200<br>+100,000 | 11,550<br>9,600<br>Solid | 9,420<br>9,800 |
| F | 2 g<br>4 g<br>8 g | 6,000<br>11,900<br>+100,000 | 6,250<br>7,500<br>Solid | 8,100<br>9,600 |

The figure '+100,00' in the table indicates that the viscosity reading was off the scale of the apparatus. The entry 'solid' in the table means that no measurements could be made on the material at all because it had set solid.

The above results show that all of the polymers have an effect on the viscosity, the results at the lowest rotation rate being particularly significant. The results of the experiments with polymer A show that it has the best effect at low polymer dosages (the amount of product added in the table is 50% by weight polymer). The results for polymers B and D, that is the other two 100% anionic polymers, are also good. The results of polymers C, E and F indicate that the polymers do have advantageous effects at higher dosages.

Example 2

Although the Brookfield viscosity measurments reported in example 1 are useful as a preliminary screen to assess the effectiveness of various polymers, it was decided that experiments giving better indications of the characteristics required of a red mud would be achieved using a Carri-med Controlled Stress Rheometer. This instrument has potential for measuring creep, relaxation, controlled stress and shear rates, steady shear and oscillatory movements. In this instrument the shear stress is the controlled variable, in contrast to conventional rheometers such as for measuring Brookfield viscosity, in which shear rate is the controlled variable.

In a first test flow measurements were carried out using the rheometer, on the same mud as used in Example 1 with the addition of polymer A dispersion at dosage rates (on a volume basis) of 0.04, 0.01, 0.15 and 0.2% (the product having a polymer content of 50% by weight).

In the flow measurements the rheometer carries out a measurement of the flow curve of the sample, constructing a graph of shear stress against shear rate. This enables a graph of viscosity against shear rate to be determined. The experiments carried out on this mud indicated that the polymer additions at each dosage rate had little effect on the profile of viscosity against shear rate. The values of the viscosity particularly at the higher shear rates did not differ a great deal from the control. These results indicate that the addition of polymer will not adversely effect the pumpability of the red mud.

Example 3

The rheometer used in Example 2 was used in a further set of experiments to measure the rigidity of the treated mud, ie to assess its properties in a mud stacking process. The rheometer is used in an "oscillation test" in which the amptitude of oscillation under various values of torque is assessed for good stacking properties a low amplitude is desired.

The results for a mud containing no polymer and a mud containing 0.1% and 0.2% by volume of the product A of Example 1 are shown in Table 2 below.

TABLE 2

| Amplitude in $10^{-3}$ radian | | | |
|---|---|---|---|
| Torque ($\mu$Nm) | Dose of product (% vol) | | |
| | None | 0.1 | 0.2 |
| 10 | 0.3 | 0.2 | 0.2 |
| 30 | 0.7 | 0.6 | 0.1 |
| 50 | 1.6 | 1.1 | 0.2 |
| 70 | 2.7 | 1.7 | 0.3 |
| 100 | 5.3 | 2.2 | 0.3 |

These results indicate that a dosage of 0.1% by volume of product A reduces the amplitude in the oscillation test, ie improves the rigidity of the mud. A higher dosage produces a very low amplitude, even at fairly high torques, indicating that the product of the process would give very good mud stacking characteristics.

Example 4

Further oscillation tests of the type in Example 3 were carried out using a different, thicker mud and using product A in different dosage rates. The results are shown in Table 3 below.

TABLE 3

| Amplitude in $10^{-3}$ radian | | | | | |
|---|---|---|---|---|---|
| Torque ($\mu$Nm) | Dose of product (% vol) | | | | |
| | 0 | 0.04 | 0.10 | 0.15 | 0.2 |
| 50 | 11 | 8 | 4 | 4 | 0 |
| 100 | 26 | 21 | 12 | 12 | 0 |
| 150 | 45 | 41 | 27 | 20 | 1 |
| 200 | 66 | 67 | 43 | 33 | 4 |

The results show that the addition of 0.04% by volume of the polymer dispersion did not have a significant effect on the rigidity of the mud. However the addition of 0.1% by volume or more of the product had an observable effect. Adding 0.2% by weight gives a very low amplitude indeed in the oscillation test.

Example 5

Further tests of the type in Examples 3 and 4 were carried out, which compared Product A with two further products G and H. G was a product consisting of agglomerated fines of particle size mainly less than 50 microns of polysodiumacrylate formed with 0.025% (based on monomer) of methylene-bisacrylamide (MBA) cross-linker by gel polymerisation, the agglomeration being carried out by swelling the fines in water to form a comminutable gel and then comminuting and drying to form agglomerates having sizes within the range 75 to 1000 microns. H was a 50% (active) dispersion in oil of particles of a 95:5 copolymer of sodium acrylate and sodium acrylamido-methylpropane sulphonic acid cross-linked with 0.01% MBA formed by reverse-phase emulsion as product B above. The results are shown in the table below. A comparison using 1% lime addition, an alternative that has been suggested for this purpose, is also shown.

TABLE 4

| Amplitude in $10^{-3}$ Radian | | | | | |
|---|---|---|---|---|---|
| Torque ($\mu$Nm) | A | G | H | Lime | Untreated |
| 50 | 0.75 | 0.5 | 2.1 | 0.2 | 4 |
| 100 | 0.5 | 0.6 | 1.5 | 0.15 | 5.5 |
| 150 | 0.3 | 1.9 | 1.3 | 0.1 | 11 |
| 200 | 0.7 | 4.1 | 1.3 | 0.3 | 38 |
| Product A & H added at 0.2% | | | | | |
| Product G 0.1% | | | | | |
| Lime 1.0% | | | | | |

Products A, G & H produced similar profiles to the blank in terms of viscosity *vs* shear rate, indicating that they would pump as easily as the blank whilst the above shows they would become rigid on standing, as required.

Lime treated slurry was 'off-scale' at all shear rates indicating that it would not pump.

**Claims**

1. A process in which material comprising an aqueous liquid with a dispersed particulate solids is pumped as a fluid then allowed to stand and rigidify and the rigidification is improved whilst retaining the pumpability of the material by, prior to pumping the material, blending into the material particles of a water-absorbent, water-insoluble polymer.

2. A process according to claim 1 in which the dispersed particulate solids have very small particle sizes, for instance, substantially all having sizes less than 100 microns, in which preferably at least 90% of the particles have sizes less than 20 microns.

3. A process according to claim 1 or 2 in which the material comprised red mud from the Bayer process, preferably a filter cake of red mud.

4. A process according to any preceding claim in which the material has a solids content in the range 30% to 80% by weight, preferably in the range 40% or 50% to 70% by weight, more preferably 55% to 65% by weight.

5. A process according to any preceding claim in which the polymer comprises particles which have an effective dry size such that at least 90% by weight of the particles have a size of less than 50 microns.

6. A process according to claim 5 in which the polymer particles are added as bonded friable aggregates of which at least 90% by weight have a size of more than 50 microns.

7. A process according to claim 5 in which the polymer particles are added as a dispersion of particles in a water-immiscible liquid.

8. A process according to any preceding claim in which the polymer is made from water soluble monomer or monomer blend, preferably from monoethylenically unsaturated monomers, most preferably in the presence of a di- or poly-ethylenically unsaturated crosslinking comonomer.

9. A process according to claim 9 in which the polymer is anionic and is preferably formed from monomers selected from ethylenically unsaturated carboxylic and sulphonic acid monomers, preferably selected from (meth)acrylic acid, allyl sulphonic acid and 2-acrylamido methyl propane sulphonic acid, optionally in combination with non-ionic comonomers, preferably selected from (meth)acrylamide and (meth)acrylic esters.

10. A product, preferably in the form of a stack, of a process according to any preceding claim.